# EUROPEAN PATENT SPECIFICATION

(11) **EP 0 610 762 B1**
(45) Date of publication and mention of the grant of the patent: **22.03.2000**
(21) Application number: 94101354.2
(22) Date of filing: 29.01.1994
(51) Int. Cl.: B29C 65/02

(54) **Method for production weld planishing of plastic sheet and joint**
Verfahren zum Glätten der Schweissnahtverbindung von Kunststoffplatten und hergestellte Verbindung
Procédé pour l'applatissement du joint soudé entre plaques en matière plastique ainsi que joint obtenu

(30) Priority: 12.02.1993 US 17179
(43) Date of publication of application: 17.08.1994
(73) Proprietor: SIGNODE CORPORATION, Glenview, Illinois 60025-5811 (US)
(72) Inventor: Powers, John G., Northbrook, Illinois 60062 (US); Adams, Karl G., Schaumburg, Illinois 60194 (US); Lindstedt, Donald W., Arlington Heights, Illinois 60004 (US)
(74) Representative: Honke, Manfred, Dr.-Ing.

(56) References cited:
- EP-A- 0 084 828
- EP-A- 0 566 338
- CH-A- 291 255
- FR-A- 1 105 654
- FR-A- 2 360 403
- FR-A- 2 462 256
- GB-A- 559 657
- US-A- 3 119 289
- US-A- 3 707 428
- US-A- 3 890 125
- US-A- 4 879 081

## Description

### BACKGROUND OF THE INVENTION

This invention is generally directed to a method for smoothing an existing joint between adjacent thermoplastic sheets. More particularly, the invention contemplates smoothing a joint between sheets which may then be further processed.

Conventional techniques, such as hot knife welding, to join two sheets of plastic together have provided an unequal sheet thickness at the joint. In a hot knife welding technique, the ends of the sheets are placed in an overlapping relationship. A conventional hot knife is then used to form a splice by fusing the two ends together. Thereafter, the fused sheet is further processed such as, for example, by slitting into individual straps for use in strapping applications.

The hot knife welding technique creates a non-planar joint between the two sheets at the splice. This non-planar joint must be manually knife scraped or otherwise mechanically worked to smooth out and to lessen the overall weld thickness to a predetermined specification value in order to satisfy PSM clearances.

The present invention is intended to overcome or minimize all of these problems, as well as to present several other improvements.

From CH-A-291 255 it is known to join the ends of recording tapes being composed in the main of hot deformable synthetic material by welding together the overlapped ends under pressure and heat which is yielding a reduced thickness of the overlapping area. This weld joint requires such high temperatures that the molecular orientation of the synthetic material and hence the strength of the joint are influenced unfavourably. Nearly the same procedure for the opposite ends of webs of thermoplastic covering material, especially high molecular weight, high viscosity materials such as fluorinated ethylene polymers (e.g. Teflon FEP), is disclosed in US-A-3 707 428.

### OBJECTS AND SUMMARY OF THE INVENTION

A general object of the present invention is to provide an improved method for reducing thickness and smoothing a weld for joining plastic sheets.

Another object of the present invention is to provide a smooth joint of plastic sheets by using a planishing method.

It is a further object of the present invention to provide an improved method of smoothing a joint between two plastic sheets that eliminates the need for manual knife scraping of the joint.

A specific object of the present invention is to provide an improved method for smoothing a joint between two plastic sheets that does not disturb the molecular orientation of the plastic material during the planishing process.

Briefly, and in accordance with the foregoing, the present invention comprises a planishing method for smoothing a joint between welded sheets. The weld of the sheets is placed between two platens. The platens are heated to a temperature which is sufficient to soften the plastic material without disturbing the molecular structure of the plastic. The platens are then pressed together with a sufficient amount of pressure while heat is continuously being applied, until the sheets achieve a relatively smooth, continuous joint. In doing this, the thickness of the sheets at the joint area is reduced by plastic flow of the material from a double thickness to approximately a single thickness. Finally, the platens are cooled thereby cooling the joined sheets.

### BRIEF DESCRIPTION OF THE DRAWINGS

The organization and manner of the structure and operation of the invention, together with further objects and advantages thereof, may best be understood by reference to the following description, taken in connection with the accompanying drawings, wherein like reference numerals identify like elements in which:
Fig. 1 is a simplified sectional view of a press in a open position for producing a planished joint according to the present invention;
Fig. 2 is a simplified sectional view of a press in a closed position for producing a planished joint according to the present invention;
Fig. 3 is an enlarged fragmentary perspective view of a pair of sheets broken away at an overlapping area before the planishing of a joint, and
Fig. 4 is a perspective view of the sheets similar to Fig. 3 with a partial sectional view of the joint after it has been planished.

### DETAILED DESCRIPTION OF THE PREFERRED EMBODIMENT

While the invention may be susceptible to embodiment in different forms, there is shown in the drawings, and herein will be described in detail, a specific embodiment with the understanding that the present disclosure is to be considered an exemplification of the principles of the invention, and is not intended to limit the invention to that as illustrated and described herein.

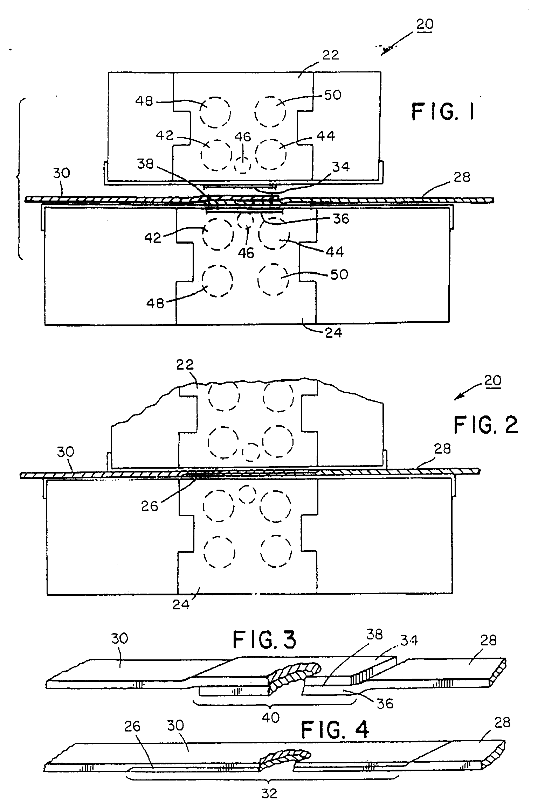

As illustrated in FIGS. 1 and 2, the present invention generally utilizes a press 20 that includes a pair of platens 22,24 that are heated and pressed together in order to form a planished weld or joint 26 between two sheets 28,30. The application of heat and pressure results in a heat formed, smooth planished joint surface 32 between the sheets 28,30.

The sheets 28,30 are made of an appropriate material that would be suitable for use in strapping applications, such as polypropylene. The thermoplastic sheets are produced in a known manner so as to have a predetermined molecular orientation wherein the molecules are arranged generally parallel to each other and extend generally longitudinally of the strip.

The sheets 28,30 are welded together at overlapping end portions 34,36 of the respective sheets 30,28 by suitable means, such as a hot knife welding technique or a friction weld, in order to form a weld 38. The overlapping end portions 34,36 provides a weld surface or overlapping area 40 which has a double thickness and a first length which is determined by the amount of overlap between the end portions 34,36.

A standard twenty ton C-frame press 20 may be used to produce the finished, planished joint surface 32 and weld 26. The press 20 includes two platens 22,24. Each platen 22,24 has a heating means which is used to heat the weld surface or overlapping area 40 between the sheets 28,30. The heating means includes heaters 42,44 that are heated electrically by appropriate means and also includes a thermocouple 46 in order to control the temperature of the heaters 42,44. Each platen 22,24 also has a cooling means that cools the sheets 28,30 and the planished joint surface 32 after the planished joint 26 has been completed. The cooling means includes a pair of cooling lines 48,50 that are used to pass water and air therethrough supplied by appropriate means.

Having generally described the apparatus that is necessary to produce the finished planished joint surface 32 and joint 26, a method in accordance with the invention will now be described in detail.

Initially, an operator places the weld surface 40 of a pre-welded sheet made up of sheets 28,30 between the separated platens 22 and 24. The weld surface or overlapping area 40 should lie completely between the platens 22,24 and approximately in the center of the platens 22,24. In the preferred embodiment, if polypropylene is being used, the sheets 28,30 overlap each other approximately 1.9 cm (three quarters of an inch) of weld length.

The heaters 42,44 are electrically energized and the platens 22,24 are heated. After the platens 22,24 reach a prescribed temperature, the press 20 is closed, as shown in FIG. 2, thereby causing the platens 22,24 to be pressed together. The top platen 22 generally abuts a top surface of the end portion 34 of sheet 30 and the bottom platen 24 generally abuts a bottom surface of the end portion 36 of sheet 28.

The electrically, temperature controlled heaters 42,44 located within the platens 22,24 causes the overlapping area 40 of the sheets 28,30 to soften. Pressure is applied to the softened material by the platens 22,24. As the sheet 28,30 material softens and as the platens 22,24 continuously apply pressure and heat, the softened material that is in direct contact with the platens 22,24 flows outwardly without materially disrupting the molecular orientation of the plastic material. As this flow occurs, the thickness of each sheet 28,30 is gradually reduced and the length of the joint area is increased. Heat and pressure are applied to the overlapping area 40 until the thickness of the overlapping area 40 is reduced from its initial double sheet thickness, as shown in FIG. 3, to its finished state which is approximately a single sheet thickness, as shown in FIG. 4. When the planished joint surface 32 is formed, the sheets 28,30 are substantially integrally planished along the weld 26. That is, the bottom surface of the top sheet 30 becomes substantially integral and planished with the top surface of the bottom sheet 28. The temperature and pressure from the platens 22,24 must be maintained for a sufficient amount of time to completely press the sheets 28,30 together in order to form a relatively smooth planished joint surface 32. This time, however, is dependent on sheet thickness.

After the heat cycle is completed, the heat from the heaters 42,44 is electrically turned off in order to cool the platens 22,24 which, in turn, causes the finished planished joint surface 32 to become cooled. An air/water mixture is passed through the cooling lines 48,50, by suitable means, not shown, in order to absorb heat from the heaters 42,44 and the platens. While this cooling process is being completed, the pressure from the platens 22,24 is maintained. After a predetermined time, which is dependent on the amount of heat to be removed and the thickness of the sheets, the pressure is released and the platens 22,24 are opened. If the finished planished joint surface 32 is not sufficiently cooled, the finished sheet will shrink adjacent to the weld 26 and wrinkling will occur. As the pressure is being released and the platens 22,24 open, the water is cycled off and air continues to blow through the cooling lines 48,50 in order to remove any remaining water from the lines 48,50. Blowing air through the lines 48,50 reduces any possible calcium build up in the lines 48,50 and also allows for faster reheating. Once this process has been completed, a heat formed, smooth planished joint surface 32 and weld 26 is produced. The joined sheets 28,30 are now ready for further processing such as, for example, to be slit into straps for use in strapping applications.

As shown in FIGS. 3 and 4, and as described hereinabove, the overlapping area 40 is reduced from a double sheet thickness to approximately a single sheet thickness by using this process. Thus, there is no need to manually knife scrape or otherwise mechanically reduce the thickness of the finished weld. As a result of the reduction in thickness, the length of the weld is increased from its initial length, as shown in FIG. 3, to approximately two times its original length, as shown in FIG. 4. This occurs because of the outward flow of material in the weld area 40 in its softened state under the pressure and heat of the platens 22,24. Some material may also flow out of the sides of the platens 22,24. If this occurs, this extra flash is trimmed off.

Also, since the initial longitudinal molecular orientation is generally maintained in the finished sheet, this process maintains a strong weld between the sheets 28,30. Initially, the molecular orientation of each sheet 28,30 is generally longitudinal. The sheets 28,30 are heated only to a point where the weld area 40 is softened and not to the point where the molecular orientation is disrupted. If the molecular orientation is disrupted, the orientation becomes randomized and the sheet is weakened. Thus, the resulting joint will be prone to breakage or splitting. For example, if polypropylene is being used as the sheet material, polypropylene actually starts to melt at a temperature of 165,5°C (330°F) and starts to lose some of its properties. Thus, the maximum temperature the polypropylene sheet should be heated to during the process of the invention is 162,7°C (325°F). After the sheets 28,30 have been planished by this process, the plastic material of the planished joint surface 32 will substantially retain its original longitudinal molecular orientation. Thus, the high strength of the material is maintained.

If polypropylene is being used as the sheet material, the heaters 42,44 should be heated to a temperature within the range of 135°C (275°F) to 162,7°C (325°F). The preferable range is between 157°C (315°F) and 163°C (325°F). Platen pressure is regulated in a range of 10 ton to 20 ton with the most desirable pressure being about 20 ton. The time that heat and pressure is applied by the platens 22,24 ranges between 15 and 60 seconds, with 60 seconds being the preferable time. However, it is to be understood that this time is dependent on sheet thickness. Final cooling temperatures should range between 65,5°C (150°F) down to 43,3°C (110°F). Again, this time is dependent upon the amount of heat to be removed and the thickness of the sheet.

While a preferred embodiment of the present invention is shown and described, it is envisioned that those skilled in the art may devise various modifications of the present invention without departing from the spirit and scope of the appended claims.

## Claims

1. A method of planishing a welded joint of pre-welded end portions of thermoplastic material sheets (28, 30) having a predetermined thickness and generally parallel molecular orientation, said welded joint having a first length and a double thickness of material, said method comprising:
heating and pressing said welded joint area (40) for softening the thermoplastic material and flowing said thermoplastic material for reducing said double thickness and increasing the length of said welded joint area, said heating being insufficient to materially disrupt the molecular orientation of the thermoplastic material.

2. A method as defined in claim 1, which includes cooling the welded joint area (40) after the double thickness has been reduced while maintaining pressure on said welded joint area.

3. A method as defined in claim 1 or 2, wherein platens (22, 24) for heating and pressing the welded joint are electrically heated at a temperature between 135°C (275°F) to 162,7°C (325°F).

4. A method as defined in any one of the claims 1 to 3, wherein platens (22, 24) for heating and pressing the welded joint are applied at a pressure between 9.07 x 10³ kg (10 ton) to 1.81 x 10⁴ kg (20 ton).

5. A method as defined in any one of the claims 1 to 4, wherein the heat and pressure are applied to the platens (22, 24) for a predetermined amount of time which is between 15 seconds and 60 seconds.

6. A method as defined in any one of the claims 1 to 5, wherein a step of cooling includes cycling water through the platens (22, 24) and cycling air through the platens.

7. A method as defined in any one of the claims 1 to 6, wherein the sheet material is polypropylene.

## Patentansprüche

1. Verfahren zum Glätten einer Verschweißung von vorgeschweißten Endteilen von Folien aus thermoplastischem Material (28, 30) mit zuvor festgelegter Dicke und im allgemeinen paralleler molekularer Ausrichtung, wobei die Verschweißung eine erste Länge und doppelte Materialdicke aufweist und wobei das Verfahren umfaßt:
Aufheizen und unter Druck Setzen des Verschweißungsbereichs (40) zum Erweichen und Fließenlassen des thermoplastischen Materials zur Verminderung dieser doppelten Dicke und zur Vergrößerung der Länge des Verschweißungsbereichs, wobei das Erhitzen nicht ausreicht, um die molekulare Orientierung des thermoplastischen Materials im wesentlichen zu unterbrechen.

2. Verfahren nach Anspruch 1, das das Abkühlen des Verschweißungsbereichs (40) nach Verminderung der doppelten Dicke unter Beibehaltung des Druckes auf den Verschweißungsbereich umfaßt.

3. Verfahren nach Anspruch 1 oder 2, wobei die Platten (22, 24) zum Erhitzen und Druckausüben auf die Verschweißung elektrisch auf eine Temperatur von 135°C (275°F) bis 163°C (325°F) erhitzt werden.

4. Verfahren nach einem der Ansprüche 1 bis 3, wobei die Platten (22, 24) zum Erhitzen und Druck Ausüben auf die Verschweißung bei einem Druck von 9,07x10² kg (10 t) bis 1,81x104 kg (20 t) eingesetzt werden.

5. Verfahren nach einem der Ansprüche 1 bis 4, wobei die Wärme und der Druck auf die Platten (22, 24) für eine zuvor festgelegte Zeitdauer von 15 sec bis 60 sec angewendet werden.

6. Verfahren nach einem der Ansprüche 1 bis 5, wobei ein Schritt zum Abkühlen das Hindurchleiten von Wasser und Luft durch die Platten (22, 24) umfaßt.

7. Verfahren nach einem der Ansprüche 1 bis 6, wobei das Folienmaterial Polypropylen ist.

## Revendications

1. Procédé de planage d'un joint des soudure de parties d'extrémités présoudées de feuilles de matériau thermoplastique (28, 30) ayant une épaisseur prédéterminée et une orientation moléculaire généralement parallèle, ledit joint de soudure ayant une première longueur et une double épaisseur de matériau, ledit procédé comprenant les phases consistant à:
chauffer et presser ladite zone de joint de soudure (40) pour ramollir le matériau thermoplastique et faire s'écouler ledit matériau thermoplastique afin de réduire ladite double épaisseur et augmenter la longueur de ladite zone de joint de soudure, ledit chauffage étant insuffisant pour rompre matériellement l'orientation moléculaire du matériau thermoplastique.

2. Procédé selon la revendication 1, qui comprend un refroidissement de la zone de joint de soudure (40) une fois que la double épaisseur a été réduite tout en maintenant une pression sur ladite zone de joint de soudure.

3. Procédé selon la revendication 1 ou 2, dans lequel des tables (22, 24) pour chauffer et presser le joint de soudure sont chauffées électriquement à une température comprise entre 135°C (275°F) et 162,7°C (325°F).

4. Procedé selon l'une quelconque des revendications 1 à 3, dans lequel les tables (22, 24) pour chauffer et presser le joint de soudure sont appliquées à une pression comprise entre 9,07 x 10³ kg (10 tons) et 1,81 x 10⁴ kg (20 tons).

5. Procédé selon l'une quelconque des revendications 1 à 4, dans lequel la chaleur et la pression sont appliquées aux tables (22, 24) pendant une durée prédéterminée qui est comprise entre 15 secondes et 60 secondes.

6. Procédé selon l'une quelconque des revendications 1 à 5, dans lequel une phase de refroidissement comprend une mise en circulation d'eau à travers les tables (22, 24) et une mise en circulation d'air à travers les tables.

7. Procédé selon l'une quelconque des revendications 1 à 6, dans lequel le matériau des feuilles est du polypropylène.
